Europäisches Patentamt

(19) European Patent Office

Office européen des brevets

(11) **EP 0 824 122 B1**

(12) **EUROPÄISCHE PATENTSCHRIFT**

(45) Veröffentlichungstag und Bekanntmachung des Hinweises auf die Patenterteilung:
**06.11.2002 Patentblatt 2002/45**

(51) Int Cl.$^7$: **C08F 279/04**, C08F 2/06

(21) Anmeldenummer: **97113198.2**

(22) Anmeldetag: **31.07.1997**

(54) **Verfahren zur Herstellung von hochkautschukhaltigen ABS-Formmassen**

Process for the preparation of high rubber ABS moldings

Procédé de préparation de masse à mouler d'ABS à haute teneur en caoutchouc

(84) Benannte Vertragsstaaten:
**BE DE ES FR GB IT NL**

(30) Priorität: **13.08.1996 DE 19632556**

(43) Veröffentlichungstag der Anmeldung:
**18.02.1998 Patentblatt 1998/08**

(73) Patentinhaber: **BAYER AG**
**51368 Leverkusen (DE)**

(72) Erfinder:
• **Weider, Richard, Dr.**
**51381 Leverkusen (DE)**
• **Michels, Gisbert, Dr.**
**51061 Köln (DE)**
• **Wingler, Frank, Dr.**
**51373 Leverkusen (DE)**

(56) Entgegenhaltungen:
**EP-A- 0 632 072        EP-A- 0 700 941**
**US-A- 5 250 611        US-A- 5 387 650**

**Beschreibung**

Die Erfindung betrifft ein einstufiges Polymerisationsverfahren zur Herstellung von schlagzähen thermoplastisch verarbeitbaren Formmassen durch radikalisch ausgelöste Polymerisation von aromatischen Monoalkenyl-Verbindungen, ethylenisch ungesättigten Nitrilen und gegebenenfalls weiterer copolymerisierbaren Verbindungen in Gegenwart von löslichen, gelfreiem Polybutadienkautschuk als Pfropfgrundlage im Lösungsmittel.

EP-A-700941 beschreibt ein Verfahren zur Herstellung von kautschukmodifizierten Formmassen durch nichtwässrige Polymerisation, wobei die Polymerisation in einem unpolaren Lösungsmittel gestartet und nach Erreichen eines Umsatzes von maximal 40 Gew-% ein polares Lösungsmittel zugesetzt wird.

Das erfindungsgemäße Verfahren zeichnet sich durch einfache Polymerisations-technik und Wirtschaftlichkeit und die erfmdungsgemäßen Produkte durch hohe Schlagzähigkeit bei gleichzeitig hoher Härte, Transluzenz, matter Oberfläche, hellem Rohton bei hervorragender Verarbeitbarkeit aus.

Niedrige Polymerisationstemperaturen und -drücke verleihen dem erfindungsgemäßen Verfahren eine hohe Betriebssicherheit.

Ziel der Erfindung ist ein wirtschaftliches, betriebssicheres Verfahren zur Herstellung von thermoplastisch verarbeitbaren ABS-Formmassen, das sich in technisch einfachen Geräten durchführen läßt und ABS mit guten Verarbeitungs- und Anwendungseigenschaften bei hervorragender Schlagzähigkeit des Pfropfkautschukes liefert. Ein weiteres Ziel der Erfindung ist, ABS-Formmassen mit hohem Kautschukgehalt bereit zu stellen, die sich als Mischungsbestandteile und Schlagzähmodifikatoren eignen und die den durch wäßrige Emulsionspolymerisation herstellbaren Formmassen gleichwertig sind.

Gegenstand der Erfindung ist ein Verfahren zur Herstellung von schlagzähen thermoplastischen Formmassen, das dadurch gekennzeichnet ist, daß man ein Monomerengemisch aus

90 bis 20 Gew.-Teilen aromatischer Monoalkenylverbindung,

10 bis 50 Gew.-Teilen ethylenisch ungesättigtes Nitril,

0 bis 30 Gew.-Teilen weiterer copolymerisierbarer Verbindungen,

in Gegenwart von

15 bis 50 Gew.-Teilen pro 100 Gew.-Teile Monomere eines löslichen gelfreien Butadienpolymerisats und in Gegenwart von

50 bis 200 Gew.-Teilen pro 100 Gew.-Teile Monomere eines Lösungsmittels radikalisch polymerisiert,

wobei das Lösungsmittel ausgewählt ist aus einem aliphatischen ($C_1$-$C_8$) oder cycloaliphatischen Alkohol, Keton, Ether, Ester, Nitril (A) oder Mischungen davon oder ein Gemisch von (A) mit einem aliphatischen ($C_4$-$C_{10}$) cycloaliphatischen oder aromatischen Kohlenwasserstoff (B) im Gewichtsverhältnis A:B von 100:0 bis 30:70 ist und die Polymerisation bis zu einem Polymerengehalt der Gesamtmischung von 30 bis 70 Gew.-% unter Durchmischen und gegebenenfalls Nachdosieren von Regler und Initiator geführt wird, so daß die isolierte thermoplastische Formmasse 20 bis 40 Gew.-% Butadienpolymerisat enthält.

In einer bevorzugten Ausführungsform betragen gleichzeitig der Polymerengehalt der Gesamtmischung 30 bis 60 Gew.-%, insbesondere 35 bis 50 Gew.-%, der Gesamtgehalt an Lösungsmittel 25 bis 60 Gew.-% und der Rest sind nicht umgesetzte Monomere. Der Gehalt der Formmasse an Butadienpolymerisat ist 20-40 Gew.-%, bevorzugt 25 bis 40 Gew.-%, insbesondere 28 bis 40 Gew.-%.

Die erfindungsgemäßen Produkte zeichnen sich durch einen niedrigen Pfropfgrad zwischen 0,05 und 1, bevorzugt zwischen 0,2 und 0,8 aus. Der Pfropfgrad ist dabei das Verhältnis

$$\frac{\text{Gelgehalt - Kautschukgehalt}}{\text{Kautschukgehalt}}$$

Mit Gelgehalt ist der im Tetrahydrofuran unlösliche Anteil der Formmasse gemeint. Die Produkte enthalten eine feindisperse Kautschukphase mit Teilchengrößen zwischen 0,05 und 10 μm, bevorzugt zwischen 0,05 und 5 μm.

Teilchengröße bedeutet das Gewichtsmittel der Teilchengrößenverteilung. Er wird mit der Ultrazentrifuge bestimmt.

Die erfindungsgemäß hergestellten, hochkautschukhaltigen Produkte können als solche verwendet werden; bevorzugt werden sie jedoch mit Co- oder Terpolymeren aus aromatischen Monoalkenyl-Monomeren, ethylenisch ungesättigten Nitril-Monomeren und gegebenenfalls weiteren copolymerisierbaren Vinyl-Monomeren und/oder Malein-Monomeren zu ebenfalls hochzähen aber in der Härte verbesserten Formmassen im Gewichtsverhältnis 1:0,25 bis 1: 10 nach üblichen Methoden der Kunststoffverarbeitung vermischt.

Masse- und Lösungspolymerisation zur Herstellung von kautschukmodifizierten Formmassen sind bekannt und in Houben-Weyl, Methoden der Organischen Chemie, Band E 20/Teil 1, S. 182-217, Georg Thieme Verlag Stuttgart, beschrieben.

Bei der Massepolymerisation (vgl. US-PS 4 587 294, US-PS 5 286 792, EP-A 376 232, US-PS 5 278 253) kann man geringe Anteile an Lösungsmitteln der Gruppen (A) oder (B) zusetzen. Man braucht aber hohe Temperaturen in der Endstufe, muß unter erhöhtem Druck polymerisieren, und es treten hohe Viskositäten auf, die sich nur durch aufwendige Techniken, u.a. Turmreaktoren, Statikmischreaktoren, Paddelreaktoren beherrschen lassen.

Die Verwendung von Lösungsmitteln (B) allein ist ebenfalls bei der Massepolymerisation beschrieben (vgl. EP-A 277 687, EP-A 657 479, US-PS 3 538 190, DE-A 2 516 834, US-PS 3 449 471), wo sie in geringen Mengen zur Verdünnung eingesetzt werden.

Die Kautschukanteile in der Polymerisationsmischung sind ebenfalls klein.

Höhere Kautschukanteile in der Polymerisationsmischung sind wegen der dann auftretenden extrem hohen Viskositäten nicht möglich.

Nichtwässrige Polymerisationsverfahren ergeben u.a. verbesserte Produkteigenschaften wie Rohton, Transluenz, Kautschukeffektivität und matte Oberflächen. Abwässer fallen nicht an. Diese Vorteile werden erfindungsgemäß mit einer einfachen Technik durch bei niedrigen Polymerisationstemperaturen 60 bis etwa 150°C, vorzugsweise bei 70 bis 120°C unter Normaldruck oder nur leicht erhöhtem Druck erzielt, wobei nur Viskositäten von unter 150 Pa.s auftreten. Man kann erfindungsgemäß auch ABS-Harze mit hohem Kautschukgehalt bis etwa 40 Gew.-% herstellen. Solche hochkautschukhaltigen ABS-Harze werden als Additive für Thermoplasten benötigt. Bislang konnten sie nur durch Polymerisation in wäßriger Emulsion hergestellt werden. Die erfindungsgemäßen Produkte zeichnen sich durch hervorragende Verarbeitungs- und Gebrauchseigenschaften aus. Durch den gegenüber der Massepolymerisation deutlich höheren Kautschukgehalt im ABS-Harz und die einfachere Technik werden auch die wirtschaftlichen Nachteile der höheren Lösungsmittelmengen ausgeglichen.

Der Kern der vorliegenden Erfindung ist die Mitverwendung größerer Mengen eines Lösungsmittels oder eines Lösungsmittelgemisches der oben definierten Gruppe (A) bei gleichzeitig hohen Kautschukgehalten in der Monomermischung und im Endprodukt sowie unvollständigem Umsatz der Monomere. Bei Einsatz der Lösungsmittel oder -Gemische aus der Gruppe (A) und gegebenenfalls der Gruppe (B) in den angegebenen Gewichtsverhältnissen 1:0 bis 3:7 gelingt es, trotz hoher Kautschukgehalte eine Phaseninversion bei ausreichenden Umsätzen schnell zu durchlaufen, so daß eine feindisperse Phase aus Pfropfkautschuk entsteht. Beim Abweichen von den erfindungsgemäßen Verhältnissen kommt es, z.B. bei ausschließlicher Verwendung von Lösungsmitteln aus der Gruppe (B), nicht mehr zur Phaseninversion und zu einem steilen Viskositätsanstieg, oder zu einer zu frühen Phaseninversion, wobei die dann gebildete disperse Phase durch zu geringe Pfropfung so grobteilig wird, daß es zu schlechten Produkteigenschaften und zu starken Ablagerungen in den Reaktoren kommt. Obwohl die Lösungsmittel aus der Gruppe (A) Nichtlöser für die Kautschuke sind, können sie auch bei hohen Kautschukgehalten in der Monomermischung in großer Menge bereits vor Polymerisationsbeginn zugesetzt werden, ohne daß Kautschuk ausfällt; andererseits lassen sich durch diese Maßnahme ein besonders günstiges rheologisches Verhalten der Polymerisationslösungen und günstige Produkteigenschaften erreichen.

Das erfindungsgemäße Verfahren kann diskontinuierlich, halbkontinuierlich und kontinuierlich durchgeführt werden. Bei der kontinuierlichen Ausführungsform kann man vorteilhaft die Lösung der Monomeren und des Kautschuks in den Lösungsmitteln in einen kontinuierlich beschickten, durchmischten und gerührten Tankreaktor bei einem stationären, nach der Phaseninversion liegenden Monomerumsatz in erster Stufe von über 10 Gew.-%, bezogen auf die Summe der Monomeren, polymerisieren und die radikalisch ausgelöste Polymerisation in mindestens einer weiteren Stufe bis zu einem Monomerenumsatz, bezogen auf die Summe der Monomeren von 30 bis 70 Gew.-% unter Durchmischen in einem oder mehreren weiter kontinuierlich betriebenen Rührkessel(n) in Kaskade oder in einem durchmischenden Pfropfenströmungsreaktor und/oder einer Kombination beider Reaktortypen fortführen, Restmonomere und Lösungsmittel nach herkömmlichen Techniken (z.B. auf Wärmeaustauschverdampfer, Entspannungsverdampfer, Strangverdampfer, Dünnfilm- oder Dünnschichtverdampfer, Schneckenverdampfer) entfernen, und in den Prozeß zurückführen. Vorteilhaft kann es auch sein, die kontinuierliche Polymerisation in drei Stufen durchzuführen, wobei die erste Stufe bei einem stationären, vor der Phaseninversion liegenden Monomerumsatz unter 10 Gew.-% und die weiteren Stufen bei den oben beschriebenen Umsätzen betrieben werden.

Die diskontinuierliche und halbkontinuierliche Polymerisation können in einem oder mehreren hintereinander geschalteten gefüllten oder teilgefüllten durchmischten Rührkesseln unter Vorlegen der Monomeren des Kautschuks und der Lösungsmittel und Polymerisation bis zum angegebenen Monomerumsatzz von 30 bis 70 Gew.-% durchgeführt werden.

Zur besseren Durchmischung und Zerteilung des eingespeisten Kautschuks kann der Polymersirup sowohl bei kontinuierlicher als auch diskontinuierlicher Fahrweise im Kreis über durchmischende und scherende Organe gepumpt werden. Solche "Loopoperationen" sind Stand der Technik und können bei der Einstellung der Teilchengröße des Kautschukes hilfreich sind. Vorteilhafter ist jedoch die Anordnung von Scherorganen zwischen zwei separaten Reaktoren, um Rückvermischung, die zu einer Verbreiterung der Teilchengrößenverteilung führt, zu vermeiden.

Die mittlere Verweilzeit beträgt 1 bis 10 Stunden. Die Polymerisation wird vorteilhaft bei 60 bis 120°C, vorzugsweise am Siedepunkt des Lösungsmittel/Polymer-Gemisches durchgeführt. Es ist vorteilhaft, die Polymerisation bei Normaldruck auszuführen, möglich ist aber auch die Polymerisation bei geringem Überdruck bis zu 6 bar.

Die Zähigkeiten der gerührten oder transportierten Medien bewegen sich im Bereich von maximal 150 Pa.s.

Das Pfropfpolymerisat kann in bekannter Weise durch Fällen in Lösungsmittel, durch Strippen mit Wasser und/oder Wasserdampf oder durch Eindampfen zur Polymerschmelze z.B. auf Enspannungsverdampfern, Strangverdampfern, Wendelrohrverdampfern, Dünnfilmverdampfem, gewissen Dünnschichtverdampfern, Fallfilmverdampfern, Schneckenverdampfern, isoliert werden.

Man kann auch in gerührten Mehrphasen-Verdampfern mit Knet- und Abstreifvorrichtungen Lösungsmittel und Restmonomere entfernen. Die Mitverwendung von Treib- und Schleppmitteln, z.B. Wasserdampf, ist möglich, jedoch kann trotz der hohen Lösemittelmengen auch ohne Verwendung solcher Schleppmittel ein sehr niedriger Restmonomerengehalt mit einfachen Eindampfmethoden erreicht werden.

Während der Polymerisation und während der Polymerisolierung können Zusatzstoffe, Stabilisatoren, Alterungsschutzmittel, Füllstoffe, Gleitmittel zugesetzt werden.

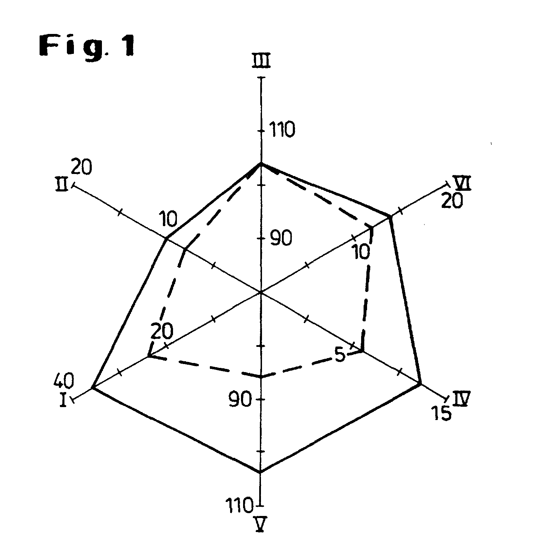

Die nach dem erfindungsgemäßen Verfahren hergestellten schlagzähen ABS-Formmassen zeigen nach Kontrastierung mit Osmiumtetroxid in elektronenmikroskopischer Aufnahme eine mono- oder polymodale Größenverteilung des Pfropfkautschukes mit hohem Innenpfropfanteil und großem "rubber phase volume". Solche Verteilungen und Strukturen, wie in Fig. 1 wiedergegeben, bewirken vorteilhafte Verarbeitungs- und Gebrauchseigenschaften (vgl. US-PS 5 166 261). Die Kautschukteilchen haben Durchmesser von <0,1 bis 10 µm.

Lösungsmittel der Gruppe (A) sind Alkohole wie Methanol, Ethanol, Propanol, Isopropanol, Butanol, Isobutanol, tert.-Butanol, Amylalkohol, Isoamylalkohol, Isooctanol, Cyclohexanol; Ketone wie Aceton, Methyl-ethylketon, Methyl-isopropylketon, Cyclopentanon, Cyclohexanon; Ether wie Tetrahydrofuran, Dioxan, Ethylenhylkoldimethyl, -diethyl, -dipropyl, -diisopropylester; Ester wie Ethylacetat, Propylacetat, Butylacetat u.a., Nitrile wie Acetonitril, Propionitril, Butyronitril. Bevorzugt wird Methyl-ethylketon und Aceton.

Lösungsmittel der Gruppe (B) sind aliphatische Kohlenwasserstoffe wie Butan, Pentan, Hexan, Heptan, Octan bzw. deren Iso-Derivate, cycloaliphatische Kohlenwasserstoffe wie Cyclopentan, Cyclohexan, Alkyl-cyclopentan, Alkylcyclohexan, aromatische Kohlenwasserstoffe wie Benzol, Toluol, Xylole, Ethylbenzol. Bevorzugt wird Toluol und Ethylbenzol.

Besonders bevorzugt sind Gemische aus Aceton und Ethylbenzol sowie aus Aceton und Toluol.

Man kann auch nur Lösungsmittel aus der Gruppe (A) verwenden. Bevorzugt ist dann Methyl-ethylketon.

Zur Einstellung der Molmassen können übliche Molmassenregler wie Mercaptane und Olefine, z.B. tert.-Dodecylmercaptan, n-Dodecylmercaptan, Cyclohexen, Terpinolen, dimeres α-Methylstyrol u.v. in Mengen von 0,05 bis 1,0 Gew.-%, bezogen auf copolymerisierende Monomeren eingesetzt werden.

Geeignete Initiatoren für die radikalische Polymerisation sind pfropfaktive, in Radikale zerfallende Peroxide wie Peroxycarbonate, Peroxydicarbonate, Diacylperoxide, Perketale oder Dialkylperoxide und/oder Azo-Verbindungen oder Mischungen hieraus. Beispiele sind Azodiisobuttersäuredinitril, Azoisobuttersäurealkylester, tert.-Butyl-perpivalat, -peroctoat, -perbenzoat, -perneodecanoat. Diese Initiatoren werden in Mengen von 0,01 bis 1 Gew.-%, bezogen auf Monomere I. bis 3., verwendet.

Während der Polymerisation oder vor der Aufarbeitung können übliche Zusatzmittel wie Farbstoffe, Antioxidantien, Gleitmittel, Stabilisatoren, wie dem Fachmann bekannt, zugesetzt werden.

Lösliche, gelfreie Butadien-Polymerisate sind Polybutadiene sowie Styrolbutadien-Copolymere in statistischer und/oder Block-Form, mit hohem 1,2-Vinyl-Anteil von 2 bis 40 %, bevorzugt von 8 bis 25 %, bezogen auf die Doppelbindungen, mit Molmassen von 50.000 bis 500.000, einschließlich verzweigter und sternförmiger Polymerer mit Gelgehalten <1 000 ppm.

Aromatische Monoalkenyl-Verbindungen 1. sind bevorzugt Styrol, α-Methylstyrol, kernsubstituierte Alkylstyrole, kemsubstituierte Chlorstyrole.

Ethylenisch ungesättigte Nitrile sind bevorzugt Acrylnitril, Methacrylnitril.

Copolymerisierbare Verbindungen sind z.B. Acrylether wie Methyl(meth)acrylat, Ethyl(meth)acrylat, tert.-Butyl(meth)acrylat, Ester der Fumar-, Itaconsäure, Maleinderivate wie Maleinsäureanhydrid, Maleinsäureester, N-substituierte Maleinimide wie vorteilhaft N-Cyclohexyl- oder N-Phenyl-Maleinimid, N-Alkyl-Phenyl-Maleinimid, weiter Acrylsäure, Methacrylsäure, Fumarsäure, Itaconsäure oder deren Amide.

Die nach dem erfindungsgemäßen Verfahren hergestellten hochkautschukhaltigen ABS-Harze können in an sich bekannter Weise, vorzugsweise in Granulatform, mit Co- oder Terpolymeren aus aromatischen Monoalkenyl-Verbindungen, ethylenisch ungesättigten Nitrilen und gegebenenfalls weiteren copolymerisierbaren Verbindungen entsprechend der oben gegebenen Definition zu ebenfalls hochzähen aber in der Härte verbesserten Formmassen compoundiert werden. Bevorzugt sind Styrol/Acrylnitril-Copolymerisate und α-Methylstyrol/Acrylnitril-Copolymerisate. Die so hergestellten, kautschukärmeren Formmassen zeichnen sich durch eine bisher nicht erreichte Eigenschaftskombination aus hoher Zähigkeit und Härte aus. Die Eigenschaften der Mischungen lassen sich dabei in weiten Grenzen über das Mischungsverhältnis variieren. Ein weiterer Vorteil dieser Verfahrensweise ist auch, daß die Wirtschaftlichkeit des Gesamtverfahrens dadurch verbessert wird, daß die gegenüber der einfachen Copolymerisation komplizierter durchzuführende Pfropfcopolymerisation in kleineren Anlagen durchgeführt werden kann.

## Beispiele

Meßmethoden:

Die Umsatzbestimmung erfolgte entweder durch Feststoffbestimmung durch Eindampfen bei 200°C oder über online-Nahinfrarotspektroskopie. Der Verlauf der Viskosität wurde während der Polymerisation durch Aufnahme des Drehmoments an der Rührwelle festgehalten. Der Kautschukgehalt im Endprodukt wurde entweder aus der Massenbilanz, durch IR-spektroskopische Methoden oder durch Messung des freien Induktionsabfalls (FID) (gepulste NMR, NMS 100 Minispek) bestimmt. Gelgehalte und Quellungsgrade wurden in Tetrahydrofuran bestimmt. Die Transmissionselektronenmikroskopischen (TEM) Aufnahmen wurden an mit $OsO_4$ kontrastierten Ultradünnschnitten gemacht. Die Untersuchung des Bruchverhaltens erfolgte an den mit V-Kerbe durch schnelle Dreipunktbiegung (Schlagbeanspruchung in einer Normkleinstäben registrierenden Fallapparatur) bei 40 mm Spannweite der Unterstützungspunkte. Die Untersuchung der Phasenstruktur erfolgte durch dynamisch-mechanische Messung der Schubmodulcharakteristik G*(T) an den NKS bei der Frequenz von ca. 1 Hz im Temperaturbereich von - 150°C bis 200°C mit dem RDS der Fa. Rheometrics.

**Beispiele 1 bis 6** Diskontinuierliche Fahrweise mit Methyl-ethyl-keton als Lösungsmittel (A)

Die diskontinuierlichen Polymerisationen wurden in einem 5 l Laborreaktor mit wandgängigem Rührer durchgeführt.

Die Vorlage wurde durch Lösen des Kautschuks Poly-cis-Butadien mit einem 1,2-Vinylanteil von 11 % der Doppelbindungen und einem 1,4-Cis-Anteil von 38 % der Doppelbindungen (Buna CB HX 502 C, Bayer Elastomeres Frances) "KA1" oder Poly-cis-Butadien-co-Styrol, 11 Gew.-% Styrol, Lösungsviskosität 27,5 mPa.s 5%ig in Styrol (Buna BL Bayer 8497, Bayer Elastomeres Frances) "KA2" in Monomeren, Lösungsmitteln, Reglern und Hilfsstoffen, gegebenenfalls Nachdosieren von Acrylnitril und Lösemittel, bei 40 bis 50°C unter Stickstoff hergestellt. Nach Aufheizen auf 75°C wurden die Initiatoren zugesetzt, ca. 45 min bis zum Ende der Phaseninversion, erkennbar am Abfallen des Drehmoments, nachgerührt, Regler nachdosiert und unter Steigerung der Temperatur gemäß dem angegebenen Temperaturprogramm bis zum Endumsatz polymerisiert und Stabilisator zugegeben. Als Hilfsstoffe wurden eingesetzt: 2,5-Di-tert.-Butylphenol "St1"; p-2,5-Ditert.-butylphenol-propionsäure-octylester (Irganox 1076® Ciba Geigy) "St2"; Paraffinöl dickflüssig DAB (KMF Laborchemie Handels GmbH) "Par". Als Regler wurde tert.-Dodecylmercaptan "DDM" verwendet, als Initiatoren tert.-Butylperpivalat (ca. 60%ige Lösung in Kohlenwasserstoffen) "I1", tert.-Amyl-perpivalat (ca. 60%ige Lösung in Kohlenwasserstoffen) "I2" und tert.-Butylperoctoat "I3". Styrol "STY" und 2-Butanon "MEK" wurden vor Einsatz destilliert, Acrylnitril "AN" kam roh zum Einsatz.

Die Zahlenangaben nach den Komponenten in der Tabelle bedeuten Gramm.

| Bsp. | Vorlage | Initiator / MEK | t-DDM / MEK | Temperatur-programm | Stabilisator / MEK |
|---|---|---|---|---|---|
| 1 | KA1 256<br>STY 914<br>AN 430<br>MEK 815<br>DDM 3,4<br>St1 0,5<br>Par. 27 | I1    1,5<br>I2    0,4<br>MEK 65 | DDM 0,7<br>MEK 130 | 3 h 82°C<br>4 h 90°C | St2    1,6<br>MEK    40 |

(fortgesetzt)

| Bsp. | Vorlage | Initiator / MEK | t-DDM / MEK | Temperatur-programm | Stabilisator / MEK |
|---|---|---|---|---|---|
| 2 | KA1 256<br>STY 914<br>AN 430<br>MEK 660<br>DDM 3,4<br>St1 0,5<br>Par. 27 | I1  1,5<br>I2  0,4<br>MEK 65 | DDM 0,7<br>MEK 130 | 2 h 84°C<br>4 h 90°C | St2  1,6<br>MEK  40 |
| 3 | KA1 256<br>STY 914<br>AN 430<br>MEK 660 DDM 3,4<br>St1 0,5<br>Par. 27 | I3  1,5<br>I2  0,4<br>MEK 65 | DDM 0,7<br>MEK 130 | 2 h 84°C<br>4 h 90°C | St2  1,6<br>MEK  40 |
| 4 | KA1 256<br>STY 914<br>AN 430<br>MEK 630<br>DDM 3,4<br>St1 0,5<br>Par. 27 | I3  1,5<br>I2  0,4<br>MEK 65 | DDM 0,7<br>MEK 130 | 2 h 84°C<br>4 h 90°C | St2  1,6<br>MEK  40 |
| 5 | KA2 256<br>STY 914<br>AN 430<br>MEK 815<br>DDM 3,4<br>St1 0,5<br>Par. 27 | I1  1,5<br>I2  0,4<br>MEK 65 | DDM 0,7<br>MEK 130 | 2 h 84°C<br>2 h 90°C | St2  1,6<br>MEK  40 |
| 6 | KA2 320<br>STY 870<br>AN 410<br>MEK 815<br>DDM 3,2<br>St1 0,5<br>Par. 27 | I1  1,5<br>I2  0,4<br>MEK 65 | DDM 0,6<br>MEK 130 | 2 h 84°C<br>2 h 90°C | St2  1,6<br>MEK  40 |

Die Lösungen wurden dann auf einer ZSK-Labor-Eindampfschnecke eingedampft und granuliert. Die Feststoffgranulate wurden mit Styrol-Acrylnitril-Harz (Staudinger-Index: 0,58 dL/g in Dimethylformamid + 1 g/L LiCl) vermischt, so daß die Mischungen ca. 14 Gew.-% Kautschuk enthielten, über eine konische entgegengesetzte drehende Zweiwellen-Laborschnecke der Firma Haake, Karlsruhe, bei 117 U/min extrudiert und granuliert. Die so erhaltenen Granulate wurden zu Normkleinstäben abgespritzt (Bedingungen des Spritzgusses: Massetemperatur: 240°C, Werkzeugtemperatur 70°C, Einspritzzeit 2,8 sek).

# EP 0 824 122 B1

Daten der Produkte:

| Bsp. | Feststoff nach Polymerisation (Gew.-%) | Umsatz (Gew.-%) | Kautschukgehalt (Gew.-%) nach Polymerisation | Kautschukgehalt nach Abmischung mit SAN | Kerbschlagzähigkeit der Mischung (kJ/m$^2$) |
|---|---|---|---|---|---|
| 1 | 35 | 50 | 27,5 | 14 | 31,5 |
| 2 | 36 | 46 | 29,5 | 14 | 31 |
| 3 | 41 | 55,7 | 25,5 | 14 | 26 |
| 4 | 43 | 58 | 25 | 14 | 30 |
| 5 | 30,2 | 41,3 | 31,6 | 14 | 28,7 |
| 6 | 35 | 50 | 34,5 | 14 | 36 |

Es wurden ausgezeichnete Kerbschlagzähigkeiten erreicht.

In Figur 1 sind die Prüfdaten des Beispiels 6 im Vergleich zu einem über Massepolymerisationsverfahren hergestellten Produkt ("Magnum 3504", DOW) dargestellt. Gemessen wurden die Kerbschlagzähigkeiten ($a_K$-IZOD) bei 23°C (I) und -40°C (II), die Wärmeformbeständigkeit (Vicat B/120) (III) der Schmelzvolumenindex MVI (10/220) (IV), die Härte (HC 30" in MPa) (V) und der Kautschukgehalt des Produktes (Gew.-%) (VI). Die durchgezogene Linie (—) entspricht Beispiel 6, die gestrichelte (----) "Magnum 3504".

**Beispiele 7 bis 11** Diskontinuierliche Fahrweise mit Ethylbenzol/Aceton als Lösungsmittel (A)+(B)

Die satzweisen Polymerisationen wurden in einem 5 l Laborreaktor bei einem Druck ≤3 bar mit wandgängigem Rührer durchgeführt.

Die Vorlage wurde durch Lösen des Kautschuks (Poly-cis-Butadien mit einem 1,2-Vinylanteil von 11 % der Doppelbindungen und einem 1,4-Cis-Anteil von 38 % der Doppelbindungen (Buna CB HX 502 C, Bayer Elastomeres Frances) "KA1" oder Poly-cis-Butadien-co-Styrol (Buna BL Bayer 8497, Bayer Elastomeres Frances) "KA2" in Monomeren, Lösungsmitteln, Reglern und Hilfsstoffen, gegebenenfalls unter Nachdosieren von Acrylnitril und Lösemittel, bei 40 bis 50°C unter Stickstoff hergestellt. Nach Aufheizen auf 75°C wurden die Initiatoren zugesetzt, nach 30 min eine weitere Initiatorlösung dosiert und unter Steigerung der Temperatur gemäß dem angegebenen Temperaturprogramm bis zum Endumsatz polymerisiesrt und Stabilisator zugegeben. Als Hilfsstoffe wurden eingesetzt: 2,5-Di-tert. -Butylphenol "St1" 2,2'-Methylen-bis-(4-methyl-6-cyclohexylphenol) (Vulkanox ZKF® Bayer AG) "St3", Dilauryl-dithiopropionat (Irganox PS 800® Ciba Geigy) "St4"; Paraffinöl dickflüssig DAB (KMF Laborchemie Handels GmbH) "Par". Als Regler wurde tert.-Dodecylmercaptan "DDM" verwendet, als Initiatoren tert.-Butyl-perpivalat (ca. 60%ige Lösung in Kohlenwasserstoffen) "I1". Styrol "STY" wurde vor Einsatz destilliert, Acrylnitril "AN", Aceton "AC" und Ethylbenzol "EB" kamen roh zum Einsatz.

Die Zahlenangaben nach den Komponenten in der Tabelle bedeuten Gramm.

**Beispiel 7**

| | Vorlage | Initiatorlösung I | Initiatorlösung II | Stabilisierung |
|---|---|---|---|---|
| KA1 | 504 | | | |
| STY | 1263 | | 24 | |
| AN | 594 | | 15 | |
| EB | 683 | | 37 | |
| AC | 775 | 60 | 45 | 10 |
| DDM | 6,63 | | | |
| St1 | 1,01 | | | |

(fortgesetzt)

|  | Vorlage | Initiatorlösung I | Initiatorlösung II | Stabilisierung |
|---|---|---|---|---|
| St3 |  |  |  | 3,8 |
| St4 |  |  |  | 4,0 |
| Par. | 40 |  |  |  |
| I1 |  | 2,21 | 3,16 |  |
| Dosierung, t [min] |  | 0 | 30-300 | 420 |
| Temperaturprogramm |  | t [min] | T [°C] |  |
|  |  | 120 | 80 |  |
|  |  | 150 | 85 |  |
|  |  | 210 | 90 |  |
|  |  | 360 | abkühlen |  |

**Beispiel 8**

|  | Vorlage | Initiatorlösung I | Initiatorlösung II | Stabilisierung |
|---|---|---|---|---|
| KA1 | 504 |  |  |  |
| STY | 1392 |  | 31 |  |
| AN | 655 |  | 18 |  |
| EB | 532 |  | 28 |  |
| AC | 737 | 60 | 43 | 10 |
| DDM | 7,75 |  |  |  |
| St1 | 1,01 |  |  |  |
| St3 |  |  |  | 3,8 |
| St4 |  |  |  | 5,0 |
| Par. | 40 |  |  |  |
| I1 |  | 2,10 | 2,45 |  |
| Dosierung, t [min] |  | 0 | 30-270 | 390 |
| Temperaturprogramm |  | t [min] | T [°C] |  |
|  |  | 90 | 80 |  |
|  |  | 150 | 85 |  |
|  |  | 210 | 90 |  |
|  |  | 330 | abkühlen |  |

**Beispiel 9**

|  | Vorlage | Initiatorlösung I | Initiatorlösung II | Stabilisierung |
|---|---|---|---|---|
| KA1 | 504 |  |  |  |
| STY | 1521 |  | 38 |  |

(fortgesetzt)

|  | Vorlage | Initiatorlösung I | Initiatorlösung II | Stabilisierung |
|---|---|---|---|---|
| AN | 716 |  | 21 |  |
| EB | 399 |  | 21 |  |
| AC | 681 | 60 | 39 | 10 |
| DDM | 9,18 |  |  |  |
| St1 | 1,01 |  |  |  |
| St3 |  |  |  | 3,8 |
| St4 |  |  |  | 5,0 |
| Par. | 40 |  |  |  |
| I1 |  | 1,92 | 1,92 |  |
| Dosierung, t [min] |  | 0 | 30-240 | 360 |
| Temperaturprogramm |  | t [min] | T [°C] |  |
|  |  | 90 | 80 |  |
|  |  | 150 | 85 |  |
|  |  | 210 | 90 |  |
|  |  | 300 | abkühlen |  |

**Beispiel 10**

|  | Vorlage | Initiatorlösung I | Initiatorlösung II | Stabilisierung |
|---|---|---|---|---|
| KA1 | 504 |  |  |  |
| STY | 1650 |  | 45 |  |
| AN | 776 |  | 25 |  |
| EB | 289 |  | 15 |  |
| AC | 614 | 60 | 36 | 10 |
| DDM | 9,98 |  |  |  |
| St1 | 1,01 |  |  |  |
| St3 |  |  |  | 3,8 |
| St4 |  |  |  | 5,0 |
| Par. | 40 |  |  |  |
| I1 |  | 1,66 | 1,66 |  |
| Dosierung, t [min] |  | 0 | 30-210 | 330 |
| Temperaturprogramm |  | t [min] | T [°C] |  |
|  |  | 60 | 80 |  |
|  |  | 120 | 85 |  |
|  |  | 180 | 90 |  |
|  |  | 270 | abkühlen |  |

**Beispiel 11**

Beispiel 11 wurde in ähnlicher Weise wie die Beispiele 7 bis 10 durchgeführt. Abweichend von den Beispielen 7 bis 10 wurde auf 90°C aufgeheizt und die Initiatorlösung I von 0 bis 80 min dosiert. Die Iniatorlösung II wurde von 180 bis 270 min dosiert. Nach Zugabe der Stabilisierung wurde von 90°C auf Raumtemperatur abgekühlt.

|  | Vorlage | Initiatorlösung I | Initiatorlösung II | Stabilisierung |
|---|---|---|---|---|
| KA2 | 466 |  |  |  |
| STY | 1326 |  |  |  |
| AN | 591 |  | 18 |  |
| EB | 512 |  |  | 40 |
| AC | 965 | 60 | 62 | 40 |
| DDM | 7,74 |  |  |  |
| St1 | 0,93 |  |  |  |
| St3 |  |  |  | 3,5 |
| St4 |  |  |  | 4,7 |
| Par. | 37 |  |  |  |
| I1 |  | 3,87 | 2,26 |  |
| Dosierung, t [min] |  | 0-80 | 180-270 | 330 |

Die Lösungen wurden dann auf einer ZSK-Labor-Eindampfschnecke eingedampft und granuliert. Die Feststoffgranulate wurden mit Styrol-Acrylnitril-Harz (Staudinger-Index: 0,58 dL/g in Dimethylformamid + 1 g/L LiCl) vermischt, so daß die Mischungen ca. 14 Gew.-% Kautschuk enthielten, über eine konische entgegengesetzte drehende Zweiwellen-Laborschnecke der Firma Haake, Karlsruhe, bei 117 U/min extrudiert und granuliert. Die so erhaltenen Granulate wurden zu Normkleinstäben abgespritzt (Bedingungen des Spritzgusses: Massetemperatur: 210°C, Werkzeugtemperatur 60°C, Einspritzzeit 2,8 sek).

Daten der Produkte

| Beispiel | 7 | 8 | 9 | 10 | 11 |
|---|---|---|---|---|---|
| Feststoff nach Polymerisation (Gew.-%) | 42,91 | 42,39 | 42,71 | 41,25 | 38,41 |
| Umsatz [Gew.-%] | 63,97 | 56,02 | 51,73 | 45,21 | 55,8 |
| Kautschukgehalt [Gew.-%] nach Polymerisation | 28,7 | 29,3 | 29,1 | 30,1 | 29,3 |
| Gelgehalt [%] | 40,42 | 38,90 | 35,1 | 32,2 |  |
| Quellungsgrad | 17,8 | 17,1 | 17,7 | 18,8 |  |
| Kautschukgehalt [Gew.-%] nach Abmischung mit SAN-Harz | 14 | 14 | 14 | 14 | 14 |
| Kerbschlagzähigkeit [kJ/m$^2$] der Mischung | 32,3 | 27,3 | 24,8 | 24,9 | 27,5 |

Es wurden ausgezeichnete Kerbschlagzähigkeiten erhalten.

**Beispiel 12** Halbkontinuierliche Fahrweise

Die halbkontinuierliche Polymerisation wurde in einem 5 l Laborreaktor mit wandgängigem Rührer durchgeführt.

Die Vorlage wurde durch Lösen des Kautschuks Poly-cis-Butadien mit einem 1,2-Vinylanteil von 11 % der Doppelbindungen und einem 1,4-Cis-Anteil von 38 % der Doppelbindungen (Buna CB HX 502 C, Bayer Elastomeres Frances) "KA1" in Monomeren, Lösungsmitteln, Reglern und Hilfsstoffen, gegebenenfalls unter Nachdosieren von Acrylnitril und Lösemittel, bei 40 bis 50°C unter Stickstoff hergestellt. Von der Vorlage wurde 20 Gew.-% in den Reaktor gefüllt und nach Aufheizen auf 87°C die Initiatorlösung I zugesetzt, bis 45 min bis zum Ende der Phaseninversion, erkennbar am Abfallen des Drehmoments, nachgerührt, und anschließend der Rest der Vorlage zusammen mit Initiatorlösung II innerhalb von 4 h bei 87°C zudosiert, wobei sich ein quasisstationärer Umsatz einstellt. Nach Ende der Zugabe wird 3 h bis zum Endumsatz polymerisiesrt und Stabilisator zugegeben. Als Hilfsstoffe wurden eingesetzt: 2,5-Di-tert.-Butylphenol "St1"; p-2,5-Di-tert.-butylphenol-propionsäure-octylester (Irganox 1076® Ciba Geigy) "St2"; Paraffinöl dickflüssig DAB (KMF Laborchemie Handels GmbH) "Par". Als Regler wurde tert.-Dodecylmercaptan "DDM" verwendet, als Initiatoren tert.-Butylperpivalat (ca. 60%ige Lösung in Kohlenwasserstoffen) "I1", tert.-Amyl-perpivalat (ca. 60%ige Lösung in Kohlenwasserstoffen) "I2" und tert.-Butylperoctoat "I3". Styrol "STY" und 2-Butanon "MEK" wurden vor Einsatz destilliert, Acrylnitril "AN" kam roh zum Einsatz.

Die Zahlenangaben nach den Komponenten in der Tabelle bedeuten Gramm.

| Beispiel | Vorlage | Initiatorlsg. I | Initiatorlsg. II | Stabilisatorlösung |
|---|---|---|---|---|
| 12 | KA1 384<br>STY 1371<br>AN 645<br>MEK 1000<br>DDM 6,05<br>St1 0,77<br>Par. 40 | I1    0,78<br>MEK 25 | I1    3,9<br>MEK 215 | St2    2,4<br>MEK 40 |

Daten der Produkte

| Bsp. | Feststoff nach Polymerisation (Gew.-%) | Umsatz (Gew.-%) | Kautschukgehalt (Gew.-%) nach Polymerisation | Kautschukgehalt nach Abmischung mit SAN | Kerbschlagzähigkeit der Mischung (kJ/m$^2$) |
|---|---|---|---|---|---|
| 12 | 41,6 | 52,6 | 27 | 14 | 29 |

**Beispiel 13** Kontinuierliche Fahrweise

Die kontinuierliche Polymerisation wurde in einer Kesselkaskade bestehend aus einem 5 l- und 10 l-Laborreaktor bei einem Druck ≤3 bar mit wandgängigem Rührer durchgeführt.

Die Kautschuklösung wurde durch Lösen des Kautschuks (Poly-cis-Butadien mit einem 1,2-Vinylanteil von 11 % der Doppelbindungen und einem 1,4-Cis-Anteil von 38 % der Doppelbindungen (Buna CB HX 502 C, Bayer Elastomeres Frances) "KA1" in Monomeren, Lösungsmitteln, Reglern und Hilfsstoffen, gegebenenfalls unter Nachdosieren von Acrylnitril und Lösemittel, bei 40 bis 50°C unter Stickstoff hergestellt. Die Initiatorlösung I wird in den Reaktor I (5 l Volumen), die Initiatorlösung II in den Reaktor II (10 l Volumen) dosiert. Die Stabilisierung wird in den Austrag des Reaktors II dosiert.

Die Zusammensetzungen der Lösungen, der Dosierströme, der mittleren Verweilzeiten und der Reaktortemperaturen sind den nachfolgenden Tabellen zu entnehmen.

Als Hilfsstoffe wurden eingesetzt: 2,5-Di-tert.-Butylphenol "St1, "2,2'-Methylen-bis-(4-methyl-6-cyclohexylphenol) (Vulkanox ZKF® Bayer AG) "St3", Dilauryl-dithiopropionat (Irganox PS 800® Ciba Geigy) "St4"; Paraffinöl dickflüssig DAB KMF Laborchemie Handels GmbH "Par". Als Regler wurde tert.-Dodecylmercaptan "DDM" verwendet, als Initiatoren tert.-Butyl-perpivalat (ca. 60%ige Lösung in Kohlenwasserstoffen) "I1". Styrol "STY" wurde vor Einsatz destilliert, Acrylnitril "AN", Aceton "AC" und Ethylbenzol "EB" kamen roh zum Einsatz.

| | Kautschuklösung | Initiatorlösung I | Initiatorlösung II | Stabilisierung |
|---|---|---|---|---|
| KA1 | 3528 | | | |
| Par. | 280 | | | |
| EB | 3360 | | | 420 |
| AC | 6097 | 1078 | 658 | 420 |

(fortgesetzt)

|  | Kautschuklösung | Initiatorlösung I | Initiatorlösung II | Stabilisierung |
|---|---|---|---|---|
| STY | 9037 |  |  |  |
| AN | 1554 | 2506 | 182 |  |
| DDM | 46,48 |  |  |  |
| I1 |  | 17,73 | 53,08 |  |
| St1 | 7,06 |  |  |  |
| St3 |  |  |  | 26,46 |
| St4 |  |  |  | 35,28 |
| Dosierstrom [g/h] | 1736,9 | 264,1 | 59,7 | 58,4 |

|  | Reaktor I | Reaktor II |
|---|---|---|
| Mittlere Verweilzeit | 1 | 3 |
| T [°C] | 90 | 90 |
| Umsatz [Gew.-%] | 14,45 | 60,42 |

Die Lösung wurde dann auf einer ZSK-Labor-Eindampfschnecke eingedampft und granuliert. Das Feststoffgranulat wurde mit Styrol-Acrylnitril-Harz (Staudinger-Index: 0,58 dL/g in Dimethylformamid + 1 g/L LiCl) vermischt, so daß die Mischungen 14 Gew.-% Kautschuk enthielten, über eine konische entgegengesetzte drehende Zweiwellen-Laborschnecke der Fa. Haake, Karlsruhe, bei 117 U/min extrudiert und granuliert. Das so erhaltene Granulat wurde zu Normkleinstäben abgespritzt (Bedingungen des Spritzgussses: Massetemperatur: 210°C, Werkzeugtemperatur 60°C, Einspritzzeit 2,8 Sek.).

| Beispiel | 13 |
|---|---|
| Feststoff nach Polymerisation [Gew.-%] | 40,6 |
| Umsatz [Gew.-%] | 60,42 |
| Kautschukgehalt [Gew.-%] nach Polymerisation | 29,8 |
| Kautschukgehalt [Gew.-%] nach Abmischung mit SAN-Harz | 14 |
| Kerbschlagzähigkeit [kJ/m$^2$] der Mischung | 33,2 |

**Patentansprüche**

1. Verfahren zur Herstellung von schlagzähen thermoplastischen Formmassen, das **dadurch gekennzeichnet ist, dass** man ein Monomerengemisch aus

   90 bis 20 Gew.-Teilen aromatischer Monoalkenylverbindung,

   10 bis 50 Gew.-Teilen ethylenisch ungesättigtes Nitril,

   0 bis 30 Gew.-Teilen weiterer copolymerisierbarer Verbindungen,

   in Gegenwart von

   15 bis 50 Gew.-Teilen pro 100 Gew.-Teile Monomere eines löslichen gelfreien Butadienpolymerisats und in Gegenwart von

   50 bis 200 Gew.-Teilen pro 100 Gew.-Teile Monomere eines Lösungsmittels radikalisch polymerisiert,

wobei das Lösungsmittel ausgewählt ist aus einem aliphatischen ($C_1$-$C_8$)oder cycloaliphatischen Alkohol, Keton, Ether, Ester, Nitril (A) oder Mischungen davon oder ein Gemisch von (A) mit einem aliphatischen ($C_4$-$C_{10}$)cyclo-aliphatischen oder aromatischen Kohlenwasserstoff (B) im Gewichtsverhältnis A:B von 100:0 bis 30:70 ist und die Polymerisation bis zu einem Polymerengehalt der Gesamtmischung von 30 bis 70 Gew.-% unter Durchmischen und gegebenenfalls Nachdosieren von Regler und Initiator geführt wird, so dass die isolierte thermoplastische Formmasse 20 bis 40 Gew.-% Butadienpolymerisat enthält.

2. Verfahren gemäß Anspruch 1, **dadurch gekennzeichnet, dass** der Polymergehalt der Gesamtmischiwg 35 bis 50 Gew.-% ist.

3. Verfahren gemäß einem der vorherigen Ansprüche, **dadurch gekennzeichnet, dass** der Gehalt der Formmasse an Butadienpolymerisat 25 bis 40 Gew.-% ist.

4. Verfahren gemäß einem oder mehreren der vorherigen Ansprüche, **dadurch gekennzeichnet, dass** das Lösungsmittel (A) ausgewählt ist aus Methanol, Ethanol, Propanol, iso-Propanol, Butanol, iso-Butanol, tert.-Butanol, Amylalkohol, iso-Amylalkohol, iso-Octanol oder Mischungen hieraus.

5. Verfahren gemäß einem oder mehreren der vorherigen Ansprüche, **dadurch gekennzeichnet, dass** das Lösungsmittel (A) ausgewählt ist aus Aceton, Methylethylketon, Methyl-iso-propylketon, Cyclopentanon, Cyclohexanon oder Mischungen hieraus.

6. Verfahren gemäß einem oder mehreren der vorherigen Ansprüche, **dadurch gekennzeichnet, dass** das Lösungsmittel (A) ausgewählt ist aus Tetrahydrofuran, Dioxan, Ethylenglykoldimethyl-, -diethyl-, -dipropyl-, -diisopropylether oder Mischungen hieraus.

7. Verfahren gemäß einem oder mehreren der vorherigen Ansprüche, **dadurch gekennzeichnet, dass** der Kohlenwasserstoff (B) ausgewählt ist aus Butan, Pentan, Hexan, Heptan, Octan, deren iso-Derivate, Cyclopentan, Cyclohexan, Alkylcyclopentan, Alkylcyclohexan oder Mischungen hieraus.

8. Verfahren gemäß einem oder mehreren der vorherigen Ansprüche, **dadurch gekennzeichnet, dass** der Kohlenwasserstoff (B) ausgewählt ist aus Benzol, Toluol, Xylolen, Ethylbenzol oder Mischungen hieraus.

**Claims**

1. Process for the preparation of impact-resistant thermoplastic moulding compositions, **characterized in that** a monomer mixture of

90 to 20 parts by wt. of aromatic monoalkenyl compound,

10 to 50 parts by wt. of ethylenically unsaturated nitrile,

0 to 30 parts by wt. of further copolymerizable compounds,

is subjected to free-radical polymerization in the presence of

15 to 50 parts by wt., per 100 parts by wt. of monomers, of a soluble gel-free butadiene polymer and in the presence of

50 to 200 parts by wt., per 100 parts by wt. of monomers, of a solvent,

wherein the solvent is chosen from an aliphatic ($C_1$-$C_8$) or cycloaliphatic alcohol, ketone, ether, ester, nitrile (A) or mixtures thereof or a mixture of (A) with an aliphatic ($C_4$-$C_{10}$) cycloaliphatic or aromatic hydrocarbon (B) in a weight ratio A:B of 100:0 to 30:70 and the polymerization is conducted up to a polymer content of the total mixture of 30 to 70 wt.%, with thorough mixing and optionally subsequent metering in of regulator and initiator, so that the thermoplastic moulding composition isolated comprises 20 to 40 wt.% butadiene polymer.

2. Process according to claim 1, **characterized in that** the polymer content of the total mixture is 35 to 50 wt.%.

3.  Process according to one of the preceding claims, **characterized in that** the content of butadiene polymer in the moulding composition is 25 to 40 wt.%.

4.  Process according to one or more of the preceding claims, **characterized in that** the solvent (A) is chosen from methanol, ethanol, propanol, iso-propanol, butanol, iso-butanol, tert-butanol, amyl alcohol, iso-amyl alcohol, iso-octanol or mixtures thereof.

5.  Process according to one or more of the preceding claims, **characterized in that** the solvent (A) is chosen from acetone, methyl ethyl ketone, methyl iso-propyl ketone, cyclopentanone, cyclohexanone or mixtures thereof.

6.  Process according to one or more of the preceding claims, **characterized in that** the solvent (A) is chosen from tetrahydrofuran, dioxane, ethylene glycol dimethyl, diethyl, dipropyl or diisopropyl ether or mixtures thereof.

7.  Process according to one or more of the preceding claims, **characterized in that** the hydrocarbon (B) is chosen from butane, pentane, hexane, heptane, octane, iso derivatives thereof, cyclopentane, cyclohexane, alkylcyclopentane, alkylcyclohexane or mixtures thereof.

8.  Process according to one or more of the preceding claims, **characterized in that** the hydrocarbon (B) is chosen from benzene, toluene, xylenes, ethylbenzene or mixtures thereof.


## Revendications

1.  Procédé de préparation de masses à mouler thermoplastiques résistantes aux chocs qui est **caractérisé en ce que** l'on polymérise par polymérisation radicalaire un mélange de monomères consistant en

    90 à 20 parties en masse d'un composé monoalcénylique aromatique,
    10 à 50 parties en masse d'un nitrile éthyléniquement insaturé,
    0 à 30 parties en masse d'autres composés copolymérisables,
    en présence de
    15 à 50 parties en masse pour 100 parties en masse de monomères d'un produit de polymérisation du butadiène sans gel soluble et en présence de
    50 à 200 parties en masse pour 100 parties en masse de monomères d'un solvant,

    où on choisit le solvant parmi un alcool aliphatique ($C_1$-$C_8$) ou cycloaliphatique, une cétone, un éther, un ester, un nitrile (A) ou des mélanges de ceux-ci ou le solvant est un mélange de (A) avec un hydrocarbure aliphatique ($C_4$-$C_{10}$), cycloaliphatique ou aromatique (B) dans un rapport massique A:B de 100:0 à 30:70, et on conduit la polymérisation jusqu'à une teneur en polymère du mélange total de 30 à 70 % en masse en mélangeant et éventuellement en ajoutant un régulateur et un initiateur, de sorte que la masse à mouler thermoplastique isolée contient 20 à 40 % en masse de produit de polymérisation du butadiène.

2.  Procédé selon la revendication 1, **caractérisé en ce que** la teneur en polymère du mélange total est de 35 à 50 % en masse.

3.  Procédé selon l'une des revendications précédentes, **caractérisé en ce que** la teneur de la masse à mouler en produit de polymérisation du butadiène est de 25 à 40 % en masse.

4.  Procédé selon une ou plusieurs des revendications précédentes, **caractérisé en ce que** le solvant (A) est choisi parmi le méthanol, l'éthanol, le propanol, l'isopropanol, le butanol, l'isobutanol, le tert-butanol, l'alcool amylique, l'alcool isoamylique, l'isooctanol et leurs mélanges.

5.  Procédé selon une ou plusieurs des revendications précédentes, **caractérisé en ce que** le solvant (A) est choisi parmi l'acétone, la méthyléthylcétone, la méthylisopropylcétone, la cyclopentanone, la cyclohexanone et leurs mélanges.

6.  Procédé selon une ou plusieurs des revendications précédentes, **caractérisé en ce que** le solvant (A) est choisi parmi le tétrahydrofurane, le dioxane, le diméthyl-, diéthyl-, dipropyl-, diisopropyléther d'éthylèneglycol et leurs mélanges.

7. Procédé selon une ou plusieurs des revendications précédentes, **caractérisé en ce que** l'hydrocarbure (B) est choisi parmi le butane, le pentane, l'hexane, l'heptane, l'octane, leurs dérivés iso, le cyclopentane, le cyclohexane, un alkylcyclopentane, un alkylcyclohexane et leurs mélanges.

8. Procédé selon une ou plusieurs des revendications précédentes, **caractérisé en ce que** l'hydrocarbure (B) est choisi parmi le benzène, le toluène, les xylènes, l'éthylbenzène et leurs mélanges.

# Fig. 1